# EUROPEAN PATENT SPECIFICATION

(11) **EP 3 048 656 B1**
(45) Date of publication and mention of the grant of the patent: **31.10.2018**
(21) Application number: 15195228.0
(22) Date of filing: 18.11.2015
(51) Int. Cl.: H01M 2/02, H01M 2/26, H01M 2/22, H01M 10/04, H01M 2/30

(54) **RECHARGEABLE BATTERY**
WIEDERAUFLADBARE BATTERIE
BATTERIE RECHARGEABLE

(30) Priority: 23.01.2015 KR 20150011561
(43) Date of publication of application: 27.07.2016
(73) Proprietor: Samsung SDI Co., Ltd., Gyeonggi-do 17084 (KR)
(72) Inventor: PARK, Seung-Hee, 17084 Gyeonggi-do (KR); LEE, Jea-Woan, 17084 Gyeonggi-do (KR); EO, Soo-Mi, 17084 Gyeonggi-do (KR); CHO, Young-Kwang, 17084 Gyeonggi-do (KR)
(74) Representative: Taor, Simon Edward William

(56) References cited:
- EP-A1- 2 325 927
- EP-A2- 1 901 387
- US-A1- 2013 224 562

## Description

Embodiments relate to a rechargeable battery.

A demand for rechargeable batteries as an energy source may increase with technical developments of mobile devices. Rechargeable batteries are batteries that may be repeatedly charged and discharged, unlike primary batteries. Small-capacitance rechargeable batteries may be used for small portable electronic devices such as a mobile phone, a laptop computer, and a camcorder, and large-capacitance batteries may be used as a power source for driving a motor in hybrid vehicles and electric vehicles.

EP 1901387 relates to a method for production of a stacked battery.

EP2325927 relates to a secondary battery.

Embodiments may be realized by providing a rechargeable battery, including an electrode assembly including wound electrodes with a separator therebetween; a pouch housing the electrode assembly; and lead tabs connected to the electrodes and drawn out of the pouch, the lead tabs including an inner tab having a first thickness, connected to the electrode, and drawn out of the electrode assembly.

The lead tabs may include an outer tab having a second thickness larger than the first thickness, connected to the inner tab outside the electrode assembly, and drawn out of the pouch.

The second thickness may be larger than the first thickness and smaller than ten times the first thickness.

The second thickness may be larger than the first thickness and smaller than five times the first thickness.

In a direction perpendicular to a longitudinal direction of a spiral-wound center of the electrode assembly, the inner tab may have a first width, and the outer tab may have a second width larger than the first width.

The second width may be larger than 0.9 times the first width and smaller than 1.5 times the first width.

The electrode assembly may have a first length in a longitudinal direction of a spiral-wound center, and the inner tab may be drawn out in the longitudinal direction of the spiral-wound center.

The inner tab may have a second length in the longitudinal direction of the spiral-wound center, and the second length may be larger than zero and smaller than half of the first length.

The lead tabs may include a first electrode tab connected to a first electrode of the electrodes and a second electrode tab connected to a second electrode.

The inner tab may include an inner tab of the first electrode tab and an inner tab of the second electrode tab; a first tab gap defined by the inner tab of the first electrode tab and the inner tab of the second electrode tab may be fixed, and a second tab gap defined by an outer tab of the first electrode tab and an outer tab of the second electrode tab may be variable.

In the electrodes, a first electrode may include aluminum and a second electrode may include copper, and in the inner tab, an inner tab of the first electrode may include aluminum and may be connected to the first electrode and an inner tab of the second electrode may include copper and may be connected to the second electrode.

The inner tab of the lead tab may be welded to uncoated regions not coated with an active material in the first electrode and the second electrode.

The inner tab of the lead tab may be welded to current collectors exposed by removing an active material from the first electrode and the second electrode.

The electrode assembly may further include an insulating tape covering its outer side.

The inner tab of the lead tab may protrude out of the insulating tape.

The inner tab of the lead tab may be drawn out in a direction perpendicular to a longitudinal direction of a spiral-wound center of the electrode assembly.

The lead tabs may include a first electrode tab connected to a first electrode of the electrodes and a second electrode tab connected to a second electrode, a first tab gap defined by an inner tab of the first electrode tab and an inner tab of the second electrode tab may be fixed in the longitudinal direction of the spiral-wound center, and a second tab gap defined by an outer tab of the first electrode tab and an outer tab of the second electrode tab may be variable in the longitudinal direction of the spiral-wound center.

The lead tabs may include a first electrode tab connected to a first electrode of the electrodes and a second electrode tab connected to a second electrode, and the inner tab may be welded to an uncoated region at a portion on at least one of the first electrode and the second electrode.

According to an aspect of the invention, there is provided a rechargeable battery as set out in claim 1. Preferred features are set out in claims 2 to 13.

Features will become apparent to those of skill in the art by describing in detail exemplary embodiments with reference to the attached drawings in which:
FIG. 1 illustrates an exploded perspective view of a rechargeable battery according to a first exemplary embodiment;
FIG. 2 illustrates a perspective view of an assembly of the rechargeable battery of FIG. 1;
FIG 3 illustrates a cross-sectional view taken along III - III in FIG. 2;
FIG. 4 illustrates a cross-sectional view of disassembled electrodes used in the electrode assembly of FIG. 3;
FIG. 5 illustrates a side view schematically of the connection relationship between a lead tab and the electrode assembly of FIG. 3;
FIG. 6 illustrates a top plan view schematically of the connection relationship between the lead tab and the electrode assembly of FIG. 3;
FIG. 7 illustrates a cross-sectional view of a method of connecting an inner tab to an electrode;
FIG. 8 illustrates an exploded perspective view of a rechargeable battery according to a second exemplary embodiment; and
FIG. 9 illustrates a cross-sectional view of an electrode assembly in a rechargeable battery according to a third exemplary embodiment.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

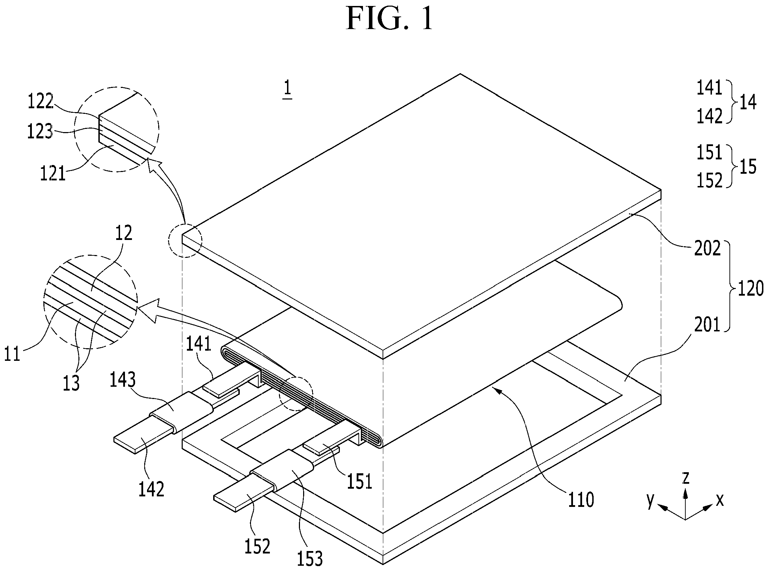

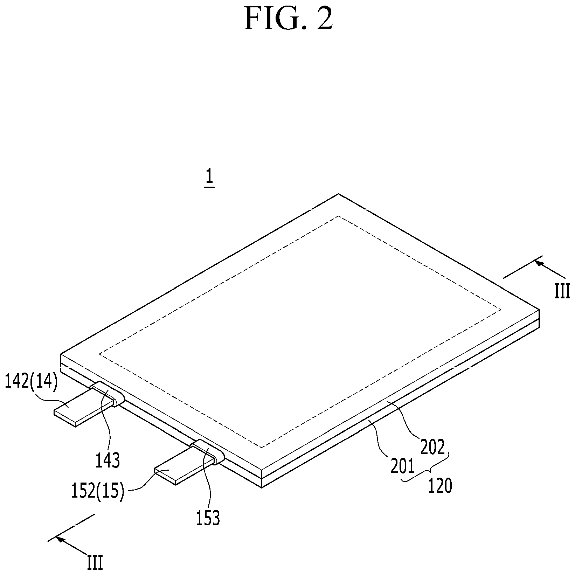

FIG. 1 illustrates an exploded perspective view of a rechargeable battery according to a first exemplary embodiment, and FIG. 2 illustrates a perspective view of an assembly of the rechargeable battery of FIG. 1. Referring to FIGS. 1 and 2, a rechargeable battery 1 according to a first exemplary embodiment may include an electrode assembly 110 for charging and discharging, a case (for example, referred to as a "pouch 120" hereafter) housing the electrode assembly 110 and an electrolyte, and a lead tab connected to the electrode assembly 110 and drawn, e.g., extending, out of the pouch 120.

The electrode assembly 110 may be formed in a jelly-roll type by winding a first electrode 11 (for convenience, referred to as a "positive electrode") and a second electrode 12 (for convenience, referred to as a "negative electrode") with a separator 13 therebetween. The separator 13 may be a polymer film transmitting lithium ions. In other embodiments, the first electrode 11, separator 13 and the second electrode 12 may be stacked.

The lead tab includes a first electrode tab 14 connected to the first electrode 11 and a second electrode tab 15 connected to the second electrode 12. The first electrode tab (for convenience, referred to as a "positive electrode tab") may be connected to the positive electrode 11 and the second electrode tab (for convenience, referred to as a "negative electrode tab") may be connected to the negative electrode 12.

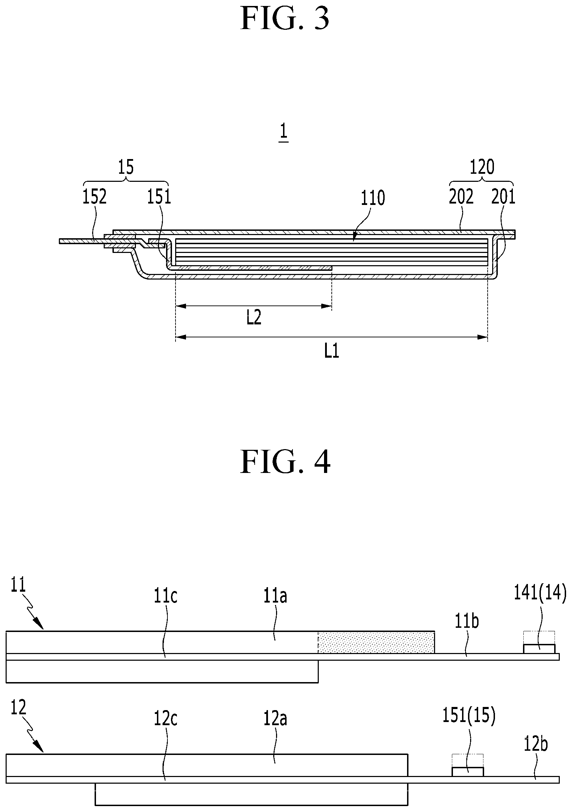

FIG 3 illustrates a cross-sectional view taken along III - III in FIG. 2, and FIG. 4 illustrates a cross-sectional view of disassembled electrodes used in the electrode assembly of FIG. 3. For convenience, the separator 13 is not shown in FIG. 4.

Referring to FIGS. 3 and 4, the positive electrode 11 may have a coated region 11a formed by coating a current collector 11c that may be a metallic thin plate 11c with an active material, and an uncoated region 11b that may be an exposed current collector not coated with an active material. For example, the current collector 11c of the positive electrode 11 may be made of Al and the positive electrode tab 14 connected to the positive electrode 11 may be made of Al.

The negative electrode 12 may have a coated region 12a formed by coating a current collector 12c that may be a metallic thin plate with an active material different from the active material of the positive electrode 11, and an uncoated region 12b that may be an exposed current collector not coated with an active material. For example, the current collector 12 of the negative electrode 12 may be made of Cu, and the negative electrode tab 15 connected to the negative electrode 12 may be made of Cu.

The positive and negative electrode tabs 14 and 15 may include respectively inner tabs 141 and 151 connected to the positive and negative electrodes 11 and 12 and drawn out of the electrode assembly 110, and outer tabs 142 and 152 connected to the inner tabs 141 and 151 outside the electrode assembly 110 and drawn out of the pouch 120.

Referring to FIGS. 1 and 4, the inner tabs 141 and 151 of the positive and negative electrode tabs 14 and 15 may be welded to the uncoated regions 11b and 12b not coated with an active material of the positive and negative electrodes 11 and 12 and may be drawn out of the electrode assembly 110, and the outer tabs 142 and 152 may be welded to the inner tabs 141 and 151 outside the electrode assembly 110.

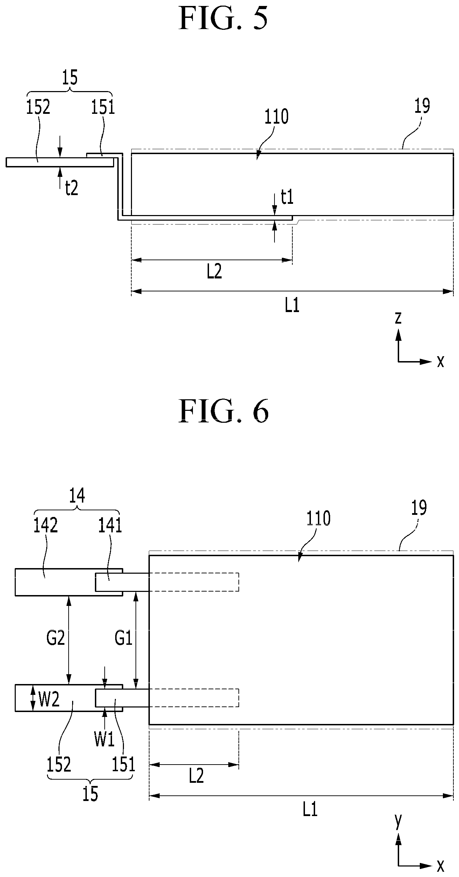

FIG. 5 illustrates a side view schematically of the connection relationship between a lead tab and the electrode assembly of FIG. 3. For convenience, the negative electrode tab 15 will be described without the positive electrode tab 14. Referring to FIG. 5, the inner tab 151 may have a first thickness t1 and the outer tab 152 may have a second thickness t2 larger than the first thickness t1.

For example, the second thickness t2 of the outer tab 152 may be set larger than the first thickness t1 of the inner tab 151 and smaller than ten times the first thickness t1 (ti < t2 < 10t1). The inner tab 151 may be provided for the electrode assembly 110 and may have the first thickness t1 that may be relatively small, and flatness of the electrode assembly 100 may be improved.

In an embodiment, the second thickness t2 of the outer tab 152 may be set larger than the first thickness t1 of the inner tab 151 and smaller than five times the first thickness t1 (t1 < t2 < 5t1). The thickness difference between the outer tab 152 and the inner tab 151 may be reduced, and the thickness difference between the welding portions of the outer tab 152 and the inner tab 151 may be reduced.

The positive and negative electrode tabs 14 and 15 may be drawn out from the same side (the left side in FIGS. 1 to 3) of the electrode assembly 110. In an embodiment, the positive and negative electrode tabs may be disposed on opposite sides (the left and right sides in FIGS. 1 to 3) of the electrode assembly.

FIG. 6 illustrates a top plan view schematically of the connection relationship between the lead tab and the electrode assembly of FIG. 3. Referring to FIGS. 5 and 6, the electrode assembly 110 may have a first length L1 in the longitudinal direction (x-axis direction) of a spiral-wound center. The inner tab 151 may be drawn out in the longitudinal direction (x-axis direction) of the spiral-wound center of the electrode assembly 110.

The inner tabs 141 and 151 may have a second length L2 in the longitudinal direction (x-axis direction) of the spiral-wound center. The second length L2 of the inner tabs 141 and 151 may be set smaller than a half of the first length L1 of the electrode assembly 110 (0 < L2 < L1/2). The second length L2 of the inner tabs 141 and 151 may be reduced within a range allowing for a sufficient current for charging and discharging of the electrode assembly 110.

As the second length L2 of the inner tabs 141 and 151 decreases, a decrease in flatness of the electrode assembly 110, for example, due to the first thickness t1 of the inner tabs 141 and 151 in the electrode assembly 110, may be minimized.

The inner tabs 141 and 151 and the outer tabs 142 and 152 may define a first width W1 in a direction (y-axis direction) crossing the longitudinal direction of the spiral-wound center of the electrode assembly 110. The inner tab 151 may be set to have the first width W1 and the outer tab 152 may be set to have the second width W2 larger than the first width W1.

For example, the second width W2 of the outer tab 142 and 152 may be set larger than 0.9 times the first width W1 of the inner tabs 141 and 151 and smaller than 1.5 times the first width W1 (0.9W1 < W2 < 1.5W1).

The inner tab 141 of the positive electrode tab 14 and the inner tab 151 of the negative electrode tab 15 may define a first tab gap G1 in the y-axis direction, and the outer tab 142 of the positive electrode tab 14 and the outer tab 152 of the negative electrode tab 15 may define a second tag gap G2 in the y-axis direction.

The inner tabs 141 and 151 may be connected to the electrode assembly 110, and the first tab gap G1 may be fixed and the second tab gap G2 may depend on the second width W2 of the outer tabs 142 and 152 and the welding positions of the outer tabs 142 and 152 with respect to the inner tabs 141 and 151.

The second width W2 may be variable with respect to the first width W1, and the welding positions of the outer tabs 142 and the 152 may be changed in the y-axis direction from the inner tabs 141 and 151. A second tab gap G2 may be variously set in the electrode assemblies 110 having the same size, and there may not be a need for changing the design of the current collectors 11c and 12c of the positive and negative electrodes 11 and 12.

The electrode assembly 110 may further include an insulating tape covering its wound outer side. The inner tabs 141 and 151 may protrude out of the insulating tape 19, and they may be welded to the outer tabs 142 and 152 after taping.

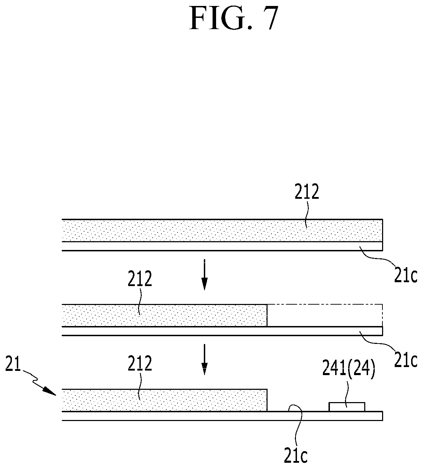

FIG. 7 illustrates a cross-sectional view of a method of connecting an inner tab to an electrode. Referring to FIG. 7, an inner tab 241 of a lead tab 24 may be welded to a current collector 21c exposed by removing a coated region 212 (compare the top and middle drawings of FIG. 7) made of an active material from an electrode 21. The capacity of the coated region 212 may further increase at the electrode 21.

Referring to FIGS. 1 and 2, the pouch 120 may house the electrode assembly 110 and the outer side of the pouch 120 may be thermally bonded, and the rechargeable battery 1 may be achieved. The outer tabs 142 and 152 of the positive and negative electrode tabs 14 and 15 may be coated with insulating members 143 and 153 and drawn out of the pouch 120 through the thermal-bonding portion. The insulating members 143 and 153 may electrically insulate the outer tabs 142 and 152 of the positive and negative electrode tabs 14 and 15 and may electrically insulate the outer tabs 142 and 152 of the positive and negative electrode tabs 14 and 15 and the pouch 120 from each other.

The pouch 120 may have a multilayered sheet structure covering the outer side of the electrode assembly 110. For example, the pouch 120 may include a polymer sheet 121 that may form the inner side of the pouch 120 and may perform insulating and thermal bonding, a PET (Polyethylene Terephthalate) sheet that may perform protection by forming an outer side, a nylon sheet or a PET-nylon composite sheet 122 (hereafter, a "nylon sheet" may be exemplified, e.g., may be used, for convenience), and a metal sheet 123 that may provide mechanical strength. The metal sheet 123 may be disposed between the polymer sheet 121 and the nylon sheet 122, and for example, it may be an aluminum sheet.

The pouch 120 may include a first exterior material 201 receiving the electrode assembly 110 and a second exterior material 202 covering the electrode assembly 110 and thermally bonded to the first exterior material 201 outside the electrode assembly 110. The first and second exterior materials 201 and 202 may be formed by the polymer sheet 121, the nylon sheet 122, and the metal sheet 123 in the same layered structure.

For example, the first exterior material 201 may be concave to receive the electrode assembly 110, and the second exterior material 202 may be flat to cover the electrode assembly 110 inside the first exterior material 201. In an embodiment, the second exterior material may be connected to the first exterior material.

A second exemplary embodiment is described hereafter. Different components from the components of the first exemplary embodiment will be described.

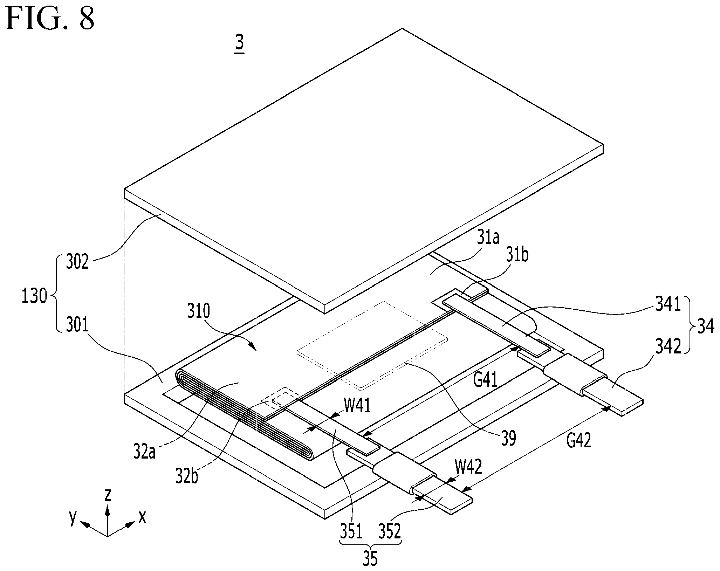

FIG. 8 illustrates an exploded perspective view of a rechargeable battery according to a second exemplary embodiment. Referring to FIG. 8, a rechargeable battery 3 according to the second exemplary embodiment may house an electrode assembly 310 and an electrolyte in a pouch 130 formed by thermally bonding a first exterior material 301 and a second exterior material 302.

Lead tabs, for example, inner tabs 341 and 351 of positive and negative electrode tabs 34 and 35 may be drawn out in a direction (y-axis direction) perpendicular to the longitudinal direction (x-axis or winding axis direction) of the spiral-wound center of the electrode assembly 310. For this purpose, the positive and negative electrodes 31 and 32 may have uncoated regions 31b and 32b at the spiral-wound ends. The inner tabs 341 and 351 may be welded to the uncoated regions 31b and 32b, and the outer tabs 342 and 352 may be welded to the ends of the inner tabs 341 and 351.

The uncoated regions 31b and 32b of the positive and negative electrodes 31 and 32 may be formed by removing portions of coated regions 31a and 32a, as shown in FIG. 7, and connected to the inner tabs 341 and 351. An insulating tape 39 may be attached to the ends of the positive and negative electrodes 31 and 32 between the welding portions of the uncoated regions 31b and 32b and the inner tabs 341 and 351.

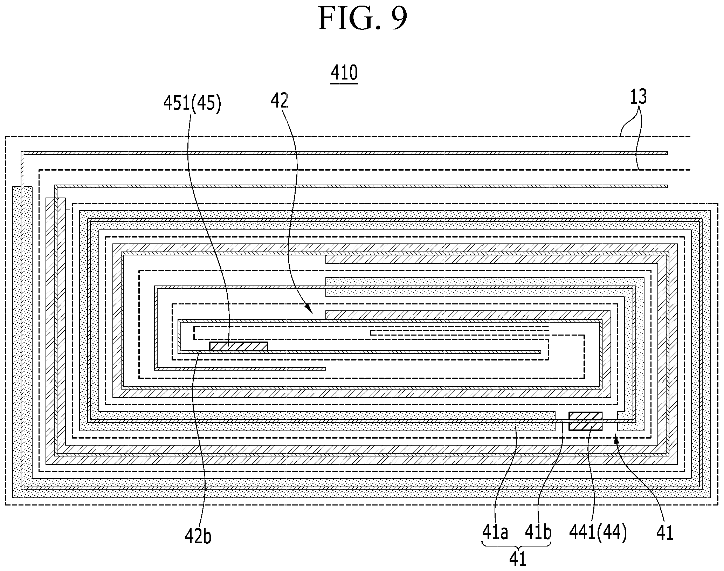

FIG. 9 illustrates a cross-sectional view of an electrode assembly in a rechargeable battery according to a third exemplary embodiment. Referring to FIG. 9, in an electrode assembly 410 of a rechargeable battery according to the third exemplary embodiment, an inner tab 441 of a positive electrode tab 44 may have a first thickness and may be welded to an uncoated region 41b on a portion of a positive electrode 41, and an inner tab 451 of a negative electrode tab 45 may have a first thickness and may be welded to an uncoated region 42b at the start end of a negative electrode 42.

The inner tab 441 may be welded, corresponding to the thickness of a coated region 41a welded and removed at the uncoated region 41b at a portion of the positive electrode 41, and it may not increase the thickness of the electrode assembly 410. An outer tab having a second thickness may be welded to the ends of the inner tabs 441 and 451 (see the first exemplary embodiment).

The inner tabs 441 and 451 of the positive and negative electrode tabs 44 and 45 may have the first thickness that may be relatively small, may be disposed inside the electrode assembly 410, and may be connected to the outer tabs outside the electrode assembly 410, and the flatness of the electrode assembly 410 may be improved.

The inner tabs 441 and 451 and the outer tabs may define a first width W41 in the longitudinal direction of the spiral-wound center of the electrode assembly 410. The inner tab 451 may be set to have the first width W41 and the outer tab 452 may be set to have the second width W42 that may be larger than the first width W41.

The inner tabs 441 and 451 may be connected to the electrode assembly 410, and the first tab gap G41 may be fixed and the second tab gap G42 may depend on the second width W2 of the outer tabs and the welding positions of the outer tabs with respect to the inner tabs 441 and 451.

Although exemplary embodiments have described rechargeable batteries having a pouch, they are equally applied to angular rechargeable batteries and may improve the flatness of electrode assemblies and the capacity of cells. It may be possible to easily adjust the tab gaps between lead tabs in electrode assemblies.

By way of summation and review, rechargeable batteries may include an electrode assembly for charging and discharging, a pouch housing the electrode assembly, and a lead tab drawn out of the pouch from the electrode assembly. The electrode assembly may be formed by welding a lead tab to an uncoated region and winding an electrode plate.

The portion with the lead tab may be thicker than the other portion in the electrode assembly. The position of the lead tab may reduce flatness of the rechargeable battery, and the increase in thickness, for example, due to the lead tab, may decrease the capacity of a cell and may deform the electrode assembly.

A lead tab may be welded to the outermost side of an electrode assembly, a pouch housing the electrode assembly may deform outward in the shape of the lead tab, and the external appearance of the cell may be deteriorated.

The electrode assembly may be manufactured by winding the electrode plate with the lead tab connected, and the tab gap between lead tabs (for example, a cathode tab and an anode tab) may be fixed in the electrode assembly. The tab gaps may not be adjusted to be different in electrode assemblies having the same size, and it may be necessary to redesign the electrode plate to change the tab gaps.

Provided is a rechargeable battery that may have improved flatness of an electrode assembly, capacity of a cell, and external appearance of the cell, even if a lead tab is on a side. Provided is a rechargeable battery that may allow for easy adjustment of tab gaps between lead tabs in an electrode assembly.

As described above, according to an exemplary embodiment, a lead tab may be composed of a thin inner tab and a thick outer tab and the inner tab may be disposed inside an electrode and drawn out of the electrode assembly, and it may be possible to improve flatness of the electrode assembly and the external appearance of a cell.

The thickness of a lead tab may be smaller inside than outside the electrode assembly, it may be possible to increase the area coated with an active material in comparison to a conventional electrode assembly with a lead tab inside the electrode assembly, and the capacity of a cell may be increased.

An outer tab that may be wider than an inner tab may be welded to the inner tab outside the electrode assembly, and it may be possible to easily adjust the tab gaps defined by outer tabs.

Embodiments relate to a rechargeable battery that may have a lead tab, which may be connected to an electrode assembly, outside a pouch.

As discussed above, embodiments of the invention can provide a rechargeable battery, comprising: an electrode assembly including first and second electrodes with a separator therebetween; a pouch housing the electrode assembly; and a first lead tab connected to the first electrode and drawn out of the pouch, wherein the first lead tab includes a first inner tab having a first thickness, connected to the first electrode, and drawn out of the electrode assembly. The first lead tab can include a first outer tab having a second thickness larger than the first thickness, connected to the first inner tab outside the electrode assembly, and drawn out of the pouch.

In some embodiments, the first electrode, separator and the second electrode are wound (e.g. spirally wound). In other embodiments, the first electrode, separator and the second electrode may be stacked.

In some embodiments, the rechargeable battery comprises a second lead tab connected to the second electrode and drawn out of the pouch, wherein the second lead tab includes a second inner tab having a first thickness, connected to the second electrode, and drawn out of the electrode assembly. In some such embodiments, the second lead tab includes a second outer tab having a second thickness larger than the first thickness, connected to the first inner tab outside the electrode assembly, and drawn out of the pouch. The second lead tab may have corresponding dimensions (e.g. the same length, width and/or thickness) to the first lead tab.

The electrode assembly may have long sides and short sides, with a longitudinal direction being defined as being generally parallel to the long sides. The first and second lead tabs may extend in various directions, for example either parallel or perpendicular to the longitudinal direction.

Hence, embodiments of the invention can provide a rechargeable battery that has thinner lead tabs inside the electrode assembly than the lead tabs that protrude outside the pouch. In other words, the inner lead tabs may be thinner than the outer lead tabs.

Example embodiments have been disclosed herein, and although specific terms are employed, they are used and are to be interpreted in a generic and descriptive sense only and not for purpose of limitation. In some instances, as would be apparent to one of skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery, comprising:
an electrode assembly (110) including a first electrode (11) and a second electrode (12) with a separator (13) therebetween;
a pouch (120) housing the electrode assembly; and
a first lead tab (14) connected to the first electrode and extending out of the pouch,
wherein the first lead tab includes a first inner tab (141) having a first thickness, connected to the first electrode, and extending out of the electrode assembly; and a first outer tab (142) having a second thickness larger than the first thickness, connected to the first inner tab outside the electrode assembly, and extending out of the pouch; and
a second lead tab (15) connected to the second electrode and extending out of the pouch, wherein the second lead tab includes a second inner tab (151) having a third thickness, connected to the second electrode, and extending out of the electrode assembly; and a second outer tab (152) having a fourth thickness larger than the third thickness, connected to the second inner tab outside the electrode assembly, and extending out of the pouch,
wherein the first inner tab and the second inner tab are connected to the same outermost side of the electrode assembly, and
wherein the first electrode, separator and the second electrode are wound.

2. The rechargeable battery as claimed in claim 1, wherein the second thickness is larger than the first thickness and smaller than ten times the first thickness.

3. The rechargeable battery as claimed in claim 1 or 2, wherein the second thickness is larger than the first thickness and smaller than five times the first thickness.

4. The rechargeable battery as claimed in any one of claims 1 to 3, wherein, in a direction perpendicular to a longitudinal direction of the electrode assembly, the first inner tab has a first width, and the first outer tab has a second width larger than the first width;
optionally wherein the second width is larger than the first width and smaller than 1.5 times the first width.

5. The rechargeable battery as claimed in any one of claims 1 to 4, wherein the electrode assembly has a first length in a longitudinal direction of the electrode assembly, and the first inner tab extends in the longitudinal direction.

6. The rechargeable battery as claimed in claim 5, wherein the first inner tab has a second length in the longitudinal direction, and the second length is larger than zero and smaller than half of the first length.

7. The rechargeable battery as claimed in any one of the preceding claims, wherein the second lead tab has corresponding dimensions to the first lead tab.

8. The rechargeable battery as claimed in any one of the preceding claims, wherein, in a direction perpendicular to a longitudinal direction of the electrode assembly, the second inner tab has a first width, and the second outer tab has a second width larger than the first width.

9. The rechargeable battery as claimed in claim 8, wherein:
a first tab gap defined by the first inner tab and the second inner tab is fixed, and
a second tab gap is defined by the second width of the first outer tab, the second width of the second outer tab and welding positions of the first and second outer tabs with respect to the first and second inner tabs.

10. The rechargeable battery as claimed in claim 9, wherein the first and second inner tabs extend out in a direction parallel to a longitudinal direction of the electrode assembly, and the first and second tab gaps are gaps in a direction perpendicular to the longitudinal direction of the electrode assembly; or
wherein the first and second inner tabs extend out in a direction perpendicular to a longitudinal direction of the electrode assembly, and the first and second tab gaps are gaps in a direction parallel to the longitudinal direction of the electrode assembly.

11. The rechargeable battery as claimed in any one of the preceding claims, wherein the first electrode includes aluminum and the second electrode includes copper, and the first inner tab comprises aluminum and the second inner tab comprises copper.

12. The rechargeable battery as claimed in any one of the preceding claims, wherein the first inner tab is welded to an uncoated region of the first electrode that is not coated with an active material, and the second inner tab is welded to an uncoated region of the second electrode that is not coated with an active material.

13. The rechargeable battery as claimed in any one of the preceding claims, wherein the electrode assembly further includes an insulating tape covering its outer side;
optionally wherein the first inner tab protrudes out of the insulating tape.

## Patentansprüche

1. Wiederaufladbare Batterie, umfassend:
eine Elektrodenanordnung (110) beinhaltend eine erste Elektrode (11) und eine zweite Elektrode (12) mit einem dazwischen befindlichen Separator (13);
ein Behältnis (120) zur Aufnahme der Elektrodenanordnung; und
einen ersten Leitungsansatz (14), der an die erste Elektrode angeschlossen ist und sich aus dem Behältnis erstreckt,
wobei der erste Leitungsansatz einen ersten inneren Ansatz (141) mit einer ersten Dicke beinhaltet, der an die erste Elektrode angeschlossen ist und sich aus der Elektrodenanordnung erstreckt; und einen ersten äußeren Ansatz (142) mit einer zweiten Dicke, die größer als die erste Dicke ist, der an den ersten inneren Ansatz außerhalb der Elektrodenanordnung angeschlossen ist und sich aus dem Behältnis erstreckt; und
einen zweiten Leitungsansatz (15), der an die zweite Elektrode angeschlossen ist und sich aus dem Behältnis erstreckt, wobei der zweite Leitungsansatz einen zweiten inneren Ansatz (151) mit einer dritten Dicke beinhaltet, der an die zweite Elektrode angeschlossen ist und sich aus der Elektrodenanordnung erstreckt;
und einen zweiten äußeren Ansatz (152) mit einer vierten Dicke, die größer als die dritte Dicke ist, der an den zweiten inneren Ansatz außerhalb der Elektrodenanordnung angeschlossen ist und sich aus dem Behältnis erstreckt,
wobei der erste innere Ansatz und der zweite innere Ansatz an die gleiche äußerste Seite der Elektrodenanordnung angeschlossen sind, und
wobei die erste Elektrode, der Separator und die zweite Elektrode gewickelt sind.

2. Wiederaufladbare Batterie nach Anspruch 1, wobei die zweite Dicke größer als die erste Dicke und kleiner als zehnmal die erste Dicke ist.

3. Wiederaufladbare Batterie nach Anspruch 1 oder 2, wobei die zweite Dicke größer als die erste Dicke und kleiner als fünfmal die erste Dicke ist.

4. Wiederaufladbare Batterie nach einem der Ansprüche 1 bis 3, wobei, in einer Richtung senkrecht zu einer Längsrichtung der Elektrodenanordnung, der erste innere Ansatz eine erste Breite aufweist und der erste äußere Ansatz eine zweite Breite, die größer als die erste Breite ist, aufweist;
wahlweise, wobei die zweite Breite größer als die erste Breite und kleiner als 1,5-mal die erste Breite ist.

5. Wiederaufladbare Batterie nach einem der Ansprüche 1 bis 4, wobei die Elektrodenanordnung eine erste Länge in einer Längsrichtung der Elektrodenanordnung aufweist und sich der erste innere Ansatz in der Längsrichtung erstreckt.

6. Wiederaufladbare Batterie nach Anspruch 5, wobei der erste innere Ansatz eine zweite Länge in der Längsrichtung aufweist und die zweite Länge größer als null und kleiner als die Hälfte der ersten Länge ist.

7. Wiederaufladbare Batterie nach einem der vorhergehenden Ansprüche, wobei der zweite Leitungsansatz dem ersten Leitungsansatz entsprechende Abmessungen aufweist.

8. Wiederaufladbare Batterie nach einem der vorhergehenden Ansprüche, wobei, in einer Richtung senkrecht zu einer Längsrichtung der Elektrodenanordnung, der zweite innere Ansatz eine erste Breite aufweist und der zweite äußere Ansatz eine zweite Breite, die größer als die erste Breite ist, aufweist.

9. Wiederaufladbare Batterie nach Anspruch 8, wobei:
ein erster Ansatzspalt durch den ersten inneren Ansatz definiert und der zweite innere Ansatz fest ist, und
ein zweiter Ansatzspalt durch die zweite Breite des ersten äußeren Ansatzes, die zweite Breite des zweiten äußeren Ansatzes und Schweißpositionen der ersten und zweiten äußeren Ansätze mit Bezug auf die ersten und zweiten inneren Ansätze definiert ist.

10. Wiederaufladbare Batterie nach Anspruch 9, wobei sich der erste und zweite innere Ansatz in einer Richtung parallel zu einer Längsrichtung der Elektrodenanordnung heraus erstrecken und der erste und zweite Ansatzspalt Spalte in einer Richtung senkrecht zu der Längsrichtung der Elektrodenanordnung sind; oder
wobei sich der erste und zweite innere Ansatz in einer Richtung senkrecht zu einer Längsrichtung der Elektrodenanordnung heraus erstrecken und der erste und zweite Ansatzspalt Spalte in einer Richtung parallel zu der Längsrichtung der Elektrodenanordnung sind.

11. Wiederaufladbare Batterie nach einem der vorhergehenden Ansprüche, wobei die erste Elektrode Aluminium enthält und die zweite Elektrode Kupfer enthält und der erste innere Ansatz Aluminium umfasst und der zweite innere Ansatz Kupfer umfasst.

12. Wiederaufladbare Batterie nach einem der vorhergehenden Ansprüche, wobei der erste innere Ansatz an eine unbeschichtete Region der ersten Elektrode, die nicht mit einem aktiven Material beschichtet ist, geschweißt ist und der zweite innere Ansatz an eine unbeschichtete Region der zweiten Elektrode, die nicht mit einem aktiven Material beschichtet ist, geschweißt ist.

13. Wiederaufladbare Batterie nach einem der vorhergehenden Ansprüche, wobei die Elektrodenanordnung ferner ein ihre Außenseite abdeckendes Isolierband beinhaltet;
wahlweise, wobei der erste innere Ansatz aus dem Isolierband hervorsteht.

## Revendications

1. Batterie rechargeable comprenant :
un ensemble d'électrodes (110) comportant une première électrode (11) et une deuxième électrode (12) avec un séparateur (13) entre elles ;
une poche (120) recevant l'ensemble d'électrodes ; et
une première languette de connexion (14) reliée à la première électrode et s'étendant hors de la poche,
dans laquelle la première languette de connexion comporte une première languette interne (141) ayant une première épaisseur, reliée à la première électrode, et s'étendant hors de l'ensemble d'électrodes ; et une première languette externe (142) ayant une deuxième épaisseur supérieure à la première épaisseur, reliée à la première languette interne à l'extérieur de l'ensemble d'électrodes, et s'étendant hors de la poche ; et
une deuxième languette de connexion (15) reliée à la deuxième électrode et s'étendant hors de la poche, où la deuxième languette de connexion comporte une deuxième languette interne (151) ayant une troisième épaisseur, reliée à la deuxième électrode, et s'étendant hors de l'ensemble d'électrodes ; et une deuxième languette externe (152) ayant une quatrième épaisseur supérieure à la troisième épaisseur, reliée à la deuxième languette interne à l'extérieur de l'ensemble d'électrodes, et s'étendant hors de la poche,
dans laquelle la première languette interne et la deuxième languette interne sont reliées au même côté externe de l'ensemble d'électrodes, et
dans laquelle la première électrode, le séparateur et la deuxième électrode sont enroulés.

2. Batterie rechargeable telle que revendiquée dans la revendication 1, dans laquelle la deuxième épaisseur est supérieure à la première épaisseur et inférieure à dix fois la première épaisseur.

3. Batterie rechargeable telle que revendiquée dans la revendication 1 ou 2, dans laquelle la deuxième épaisseur est supérieure à la première épaisseur et inférieure à cinq fois la première épaisseur.

4. Batterie rechargeable telle que revendiquée dans l'une quelconque des revendications 1 à 3, dans laquelle, dans une direction perpendiculaire à une direction longitudinale de l'ensemble d'électrodes, la première languette interne a une première largeur, et la première languette externe a une deuxième largeur supérieure à la première largeur ;
éventuellement, dans laquelle la deuxième largeur est supérieure à la première largeur et inférieure à 1,5 fois la première largeur.

5. Batterie rechargeable telle que revendiquée dans l'une quelconque des revendications 1 à 4, dans laquelle l'ensemble d'électrodes a une première longueur dans une direction longitudinale de l'ensemble d'électrodes, et la première languette interne s'étend dans la direction longitudinale.

6. Batterie rechargeable telle que revendiquée dans la revendication 5, dans laquelle la première languette interne a une deuxième longueur dans la direction longitudinale, et la deuxième longueur est supérieure à zéro et inférieure à la moitié de la première longueur.

7. Batterie rechargeable telle que revendiquée dans l'une quelconque des revendications précédentes, dans laquelle la deuxième languette de connexion a des dimensions correspondant à la première languette de connexion.

8. Batterie rechargeable telle que revendiquée dans l'une quelconque des revendications précédentes, dans laquelle, dans une direction perpendiculaire à une direction longitudinale de l'ensemble d'électrodes, la deuxième languette interne a une première largeur, et la deuxième languette externe a une deuxième largeur supérieure à la première largeur.

9. Batterie rechargeable telle que revendiquée dans la revendication 8, dans laquelle :
un premier intervalle de languettes défini par la première languette interne et la deuxième languette interne est fixe, et
un deuxième intervalle de languettes est défini par la deuxième largeur de la première languette externe, la deuxième largeur de la deuxième languette externe et des positions de soudage des première et deuxième languettes externes par rapport aux première et deuxième languettes internes.

10. Batterie rechargeable telle que revendiquée dans la revendication 9, dans laquelle les première et deuxième languettes internes s'étendent vers l'extérieur dans une direction parallèle à une direction longitudinale de l'ensemble d'électrodes, et les premier et deuxième intervalles de languettes sont des intervalles dans une direction perpendiculaire à la direction longitudinale de l'ensemble d'électrodes ; ou
dans laquelle les première et deuxième languettes internes s'étendent vers l'extérieur dans une direction perpendiculaire à une direction longitudinale de l'ensemble d'électrodes, et les premier et deuxième intervalles de languettes sont des intervalles dans une direction parallèle à la direction longitudinale de l'ensemble d'électrodes.

11. Batterie rechargeable telle que revendiquée dans l'une quelconque des revendications précédentes, dans laquelle la première électrode comporte de l'aluminium et la deuxième électrode comporte du cuivre, et la première languette interne comprend de l'aluminium et la deuxième languette interne comprend du cuivre.

12. Batterie rechargeable telle que revendiquée dans l'une quelconque des revendications précédentes, dans laquelle la première languette interne est soudée à une région non revêtue de la première électrode qui n'est pas revêtue d'un matériau actif, et la deuxième languette interne est soudée à une région non revêtue de la deuxième électrode qui n'est pas revêtue d'un matériau actif.

13. Batterie rechargeable telle que revendiquée dans l'une quelconque des revendications précédentes, dans laquelle l'ensemble d'électrodes comporte en outre un ruban isolant couvrant son côté externe ;
éventuellement dans laquelle la première languette interne fait saillie hors du ruban isolant.
